# EUROPÄISCHE PATENTSCHRIFT

(11) **EP 0 567 784 B1**
(45) Veröffentlichungstag und Bekanntmachung des Hinweises auf die Patenterteilung: **29.05.1996**
(21) Anmeldenummer: 93105009.0
(22) Anmeldetag: 26.03.1993
(51) Int. Cl.: F01D 17/16

(54) **Axialdurchströmte Turbine**
Axial flow turbine
Turbine à écoulement axial

(30) Priorität: 25.04.1992 DE 4213709
(43) Veröffentlichungstag der Anmeldung: 03.11.1993
(73) Patentinhaber: ASEA BROWN BOVERI AG, CH-5401 Baden (CH)
(72) Erfinder: Müller, Ferdinand, W-7892 Albbruck-Buch (DE)
(74) Vertreter: Klein, Ernest

(56) Entgegenhaltungen:
- DE-C- 522 531
- US-A- 4 497 171
- US-A- 4 768 922

## Beschreibung

### Technisches Gebiet

Die Erfindung betrifft ein Verfahren zur Höhen-Variation des durchströmten Kanals einer axialdurchströmten Turbine gemäss Oberbegriff des Patentanspruchs.

### Stand der Technik

Derartige axialdurchströmte Turbinen sind beispielsweise bei Abgasturboladern hinlänglich bekannt. Neben der Leitschaufelverstellung am Verdichter ist als Regeleingriff zur Verbesserung der Beschleunigung und des Drehmomentenverhaltens auch die Leitschaufelverstellung an der Turbine eine mögliche Massnahme. Ein Beispiel hierfür liefert die EP 253 234 Al. Mit den verstellbaren Turbinenleitschaufeln soll für einen gegebenen Durchsatz ein grösseres Gefälle erzeugt werden. Dadurch erhöht sich die Turbinenleistung, die Turbinendrehzahl und schliesslich der Ladedruck. Damit die Verstellschaufeln während des "heissen" Betriebes nicht klemmen, müssen sie in der Regel mit angemessenem Spiel eingebaut werden. Besonders im zugedrehten Zustand kann sich die Spaltströmung am Kopf und am Fuss der Schaufeln sehr störend auf die Hauptströmung im Kanal auswirken. Da überdies auf die Verstellschaufeln grosse Fluidkräfte in Axial- und in Umfangsrichtung einwirken, müssen des öfteren die Schaufeln sowohl am Kopf als auch am Fuss eingespannt werden, um die Verstellwelle zu entlasten.

Aus der US 4,497,171 ist ein Verfahren zur Anpassung des freien Durchtrittsquerschnittes verstellbarer Leitschaufeln von Turbinen bekannt, wobei die Leitschaufeln vorzugsweise radial in den durchströmten Kanal eingefahren respektiv ausgefahren werden können.

Ferner ist aus der DE-C-522531 ein Verfahren zur Anpassung des freien Durchtrittsquerschnittes verstellbarer Leitschaufeln von Turbinen bekannt, bei dem die vorerst frei bewegliche Austrittsseite der Leitschaufeln durch Anpressstücke oder Punktschweissung in ihrer definitiven Lage festgehalten wird.

### Darstellung der Erfindung

Der Erfindung liegt die Aufgabe zugrunde, bei axial durchströmten Turbinen der eingangs genannten Art die variable Turbinengeometrie sowohl durch Verdrehung der Leitschaufeln als auch durch Anpassung der Schaufelhöhe zu ermöglichen.

Erfindungsgemäss wird dies mit den kennzeichnenden Merkmalen Patentanspruchs erreicht.

Diese Lösung weist unter andern den Vorteil auf, dass der Verstellmechanismus beim Austauschen der Elemente nicht beinträchtigt wird.

### Kurze Beschreibung der Zeichnung

In der Zeichnung ist ein Ausführungsbeispiel der Erfindung anhand einer einstufigen Abgasturboladerturbine mit axial/radialem Austritt dargestellt. Die einzige Figur zeigt einen Teillängsschnitt durch eine Turbine. Es sind nur die für das Verständnis der Erfindung wesentlichen Elemente gezeigt. Nicht dargestellt sind von der Anlage beispielsweise der Verdichterteil, die Gehäuse, der Rotor mitsamt Lagerung usw. Die Strömungsrichtung des Arbeitsmittels ist mit Pfeilen bezeichnet.

### Weg zur Ausführung der Erfindung

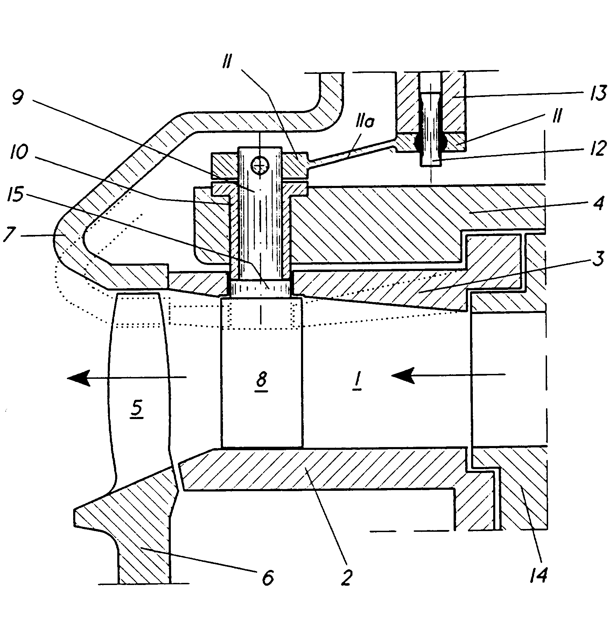

In der in Fig.1 schematisch gezeigten Gasturbine sind die den durchströmten Kanal 1 begrenzenden Wandungen zum einen die innere Nabe 2 und zum andern der äussere Schaufelträger 3. Letzterer ist auf nicht näher dargestellte Art im Gehäuse 4 und in einem stromaufwärts angeordneten Zuströmgehäuse 14 eingehängt. Im Bereich der Laufschaufeln 5 wird der Kanal 1 innen begrenzt durch die Rotorscheibe 6 und aussen durch die Abdeckung 7.

Die verstellbaren Leitschaufeln 8 sind mit ihrer jeweiligen Verstellwelle 9 vorzugsweise einteilig ausgeführt, wobei ein Bund 15 die Welle 9 mit dem Schaufelblatt verbindet. Die Welle 9 ist in einer Buchse 10 gelagert, welche das Gehäuse 4 und teilweise den Schaufelträger 3 durchdringt. An ihrem aus der Buchse 10 herausragenden Ende ist die Welle mit einem Schwenkhebel 11 verbunden. Dieser Hebel ist über einen Bolzen 12 mit einem Verstellring 13 verbunden.

Die eigentliche Verstellung der Leitschaufeln 8 im Gitter erfolgt über das Hebelgestänge 9, 11, 12, 13 durch nicht dargestellte Betätigungsmittel, wie sie beispielsweise aus dem Verdichterbau bekannt sind. Die Verstellung erfolgt vorzugsweise automatisch in Funktion der Betriebsparameter wie Ladedruck, Drehzahl usw.

Der Schwenkhebel 11 ist in seinem mittleren Teil lla als Blattfeder ausgebildet. Nach der Montage ist diese Blattfeder vorgespannt und wirkt in Längsrichtung auf die Verstellwelle 9. Diese wird dabei durch die Buchse 10 radial einwärts bewegt, bis die Schaufelspitze der Leitschaufel am Anschlag mit der Nabe ist.

Die Maschinenkonstruktion ist nunmehr so gestaltet, dass zur Anpassung an unterschiedliche Massenströme neben der Verstellung der Leitschaufeln während des Betriebes auch eine Höhen-Variation des durchströmten Kanals vorgenommen werden kann. Hierzu ist gemäss punktierter Darstellung in der Zeichnung vorgesehen, den Schaufelträger 3 und die Abdeckung 7 auszutauschen. Der Verstellmechanismus 9, 11, 12, 13 bleibt hiervon unberührt. Die Gesamtlänge der Leitschaufeln bleibt gegenüber dem Auslegungsfall ebenfalls unverändert. Unverändert bleibt bei den Leitschaufeln ebenfalls die axiale Länge der Verstellwelle 9. Zur "neuen" Länge des aktiven Schaufelblattes wird lediglich die Höhe des Bundes 15 angepasst. Diese Massnahme kann selbstverständlich nur bei geöffneter Maschine getroffen werden.

### Bezugszeichenliste

- 1: Kanal
- 2: Nabe
- 3: Schaufelträger
- 4: Gehäuse
- 5: Laufschaufel
- 6: Rotorscheibe
- 7: Abdeckung
- 8: verstellbare Leitschaufel
- 9: Welle
- 10: Buchse
- 11: Schwenkhebel
- 11a: Federmittel
- 12: Bolzen
- 13: Verstellring
- 14: Zuströmgehäuse
- 15: Bund

## Patentansprüche

1. Verfahren zur Höhen-Variation des durchströmten Kanals einer axialdurchströmten Turbine mit mindestens einer Reihe einzeln verstellbarer Leitschaufeln (8) und mindestens einer Reihe Laufschaufeln (5), wobei die Leitschaufeln über eine in einem Gehäuse (4) gelagerte und einen Schaufelträger (3) durchdringende Verstellwelle (9) verdrehbar sind, wozu die Verstellwelle über einen Bund (15) mit dem Schaufelblatt verbunden ist, und wobei die Schaufelspitzen der Laufschaufeln gegen eine Abdeckung (7) dichten,
dadurch gekennzeichnet,
dass bei geöffneter Turbine neben der Beschaufelung (5, 8) nur der Schaufelträger (3) und die Abdeckung (7) ausgetauscht werden, um die Kanalkontur an unterschiedlich hohe Beschaufelungen (5, 8) anzupassen, wobei bei unveränderter Gesamtlänge der Leitschaufeln (8) und der Verstellwelle (9) eine Anpassung der Höhe des den Schaufelträger (3) durchdringenden Bundes (15) an die Schaufelblattlänge durchgeführt wird.

## Claims

1. Method of varying the height of the flow duct of an axial flow turbine with at least one row of individually adjustable guide vanes (8) and at least one row of rotor blades (5), in which the guide vanes can be rotated by means of an adjusting shaft (9), supported in a casing (4) and passing through a vane carrier (3), for which purpose the adjusting shaft is connected via a collar (15) to the vane aerofoil, and in which the tips of the rotor blades seal against a cover (7), characterized in that, in addition to the blading (5,8), only the vane carrier (3) and the cover (7) are exchanged, with the turbine open, in order to match the duct contour to different heights of blading (5,8), matching of the height of the collar (15), which passes through the vane carrier (3), to the length of the vane aerofoil being carried out with the total length of the guide vanes (8) and of the adjusting shaft (9) unaltered.

## Revendications

1. Procédé pour faire varier la hauteur du canal d'écoulement d'une turbine à écoulement axial avec au moins une rangée d'aubes directrices (8) réglables individuellement et au moins une rangée d'aubes mobiles (5), dans lequel les aubes directrices peuvent tourner au moyen d'un arbre de réglage (9) supporté dans une enveloppe (4) et traversant un support d'aubes (3), l'arbre de réglage étant à cet effet relié à la pale de l'aube par un bourrelet (15), et dans lequel les pointes des aubes mobiles s'appliquent de façon étanche contre un couvercle (7), caractérisé en ce que, la turbine étant ouverte, on échange à côté de l'aubage (5, 8) uniquement le support d'aubes (3) et le couvercle (7), pour adapter le profil du canal à des aubages (5, 8) de hauteurs différentes, dans lequel on effectue une adaptation de la hauteur du bourrelet (15) traversant le support d'aubes (3) à la longueur de la pale des aubes, tout en ne changeant pas la longueur totale des aubes directrices (8) et de l'arbre de réglage (9).
